Europäisches Patentamt

**European Patent Office**

**Office européen des brevets**

(19)

(11) Numéro de publication: **0 001 542**
**A1**

(12)

# DEMANDE DE BREVET EUROPEEN

(21) Numéro de dépôt: **78870006.0**

(51) Int. Cl.²: **G 05 D 23/01, H 05 B 3/00**

(22) Date de dépôt: **06.09.78**

(30) Priorité: **27.09.77 BE 859073**

(43) Date de publication de la demande: **18.04.79**
**Bulletin 79/8**

(84) Etats contractants désignés: **DE FR GB NL**

(71) Demandeur: **Eeckhout, Jules, rue Dr. Zamenhof 2**
**Bte 20, B-1070 Bruxelles (BE)**
(84) Etats contractants désignés: **DE FR GB NL**

(71) Demandeur: **Eeckhout, Georges, rue Dr. Zamenhof 2**
**Bte 20, B-1070 Bruxelles (BE)**
(84) Etats contractants désignés: **DE FR GB NL**

(72) Inventeur: **Eeckhout, Jules, rue Dr. Zamenhof 2**
**Bte 20, B-1070 Bruxelles (BE)**
Inventeur: **Eeckhout, Georges, rue Dr. Zamenhof 2**
**Bte 20, B-1070 Bruxelles (BE)**

(74) Mandataire: **Kellens, Georges E., c/o BUGNION S.A.**
**rue de Namur 43, B-1000 Bruxelles (BE)**

(54) Procédé de régulation de la température d'un corps chauffant bimétallique servant de thermocouple pendant les arrêts du courant électriwue de chauffage et appareil électrique utilisant ce procédé.

(57) L'invention concerne d'une part, un procédé de régulation de la température d'un corps chauffant bimétallique servant de thermocouple pendant les arrêts du courant électrique de chauffage, et d'autre part, un dispositif électrique utilisant ce procédé; celui-ci se caractérise en ce que l'on utilise l'élément chauffant (2) lui-même comme sonde de température de sorte à ne devoir prévoir que deux fils (13, 15; 14, 16) à l'appareillage de régulation de chauffage.

1     2

- 1 -

## Procédé de régulation de la température d'un corps chauffant bimétallique servant de thermocouple pendant les arrêts du courant électrique de chauffage et appareil électrique utilisant ce procédé

L'invention concerne d'une part, un procédé de régulation de la température d'un corps chauffant bimétallique servant de thermocouple pendant les arrêts du courant électrique de chauffage, et d'autre part, un dispositif électrique utilisant ce procédé.

On sait qu'entre un régulateur et l'élément chauffé à l'électricité, on utilise quatre fils : deux pour le courant de chauffage et deux pour le signal de la sonde thermocouple; ce cablage est très encombrant et difficile à installer dans des endroits exigus.

La présente invention a pour but de réduire à deux le nombre de fils d'interconnexion et de combiner, en un seul élément, la résistance chauffante et la sonde thermocouple et selon l'invention, le procédé de régulation de la température d'une résistance de chauffage est caractérisé en ce que l'on utilise l'élément chauffant lui-même comme sonde de température de sorte à ne devoir prévoir que deux fils à l'appareillage de régulation de chauffage.

On utilise la technologie suivante :

la boucle de régulation comporte une résistance formée par deux métaux réunis par une soudure formant thermocouple. Cette résustance est branchée simultanément aux bornes de la source d'énergie débitant des impulsions de courant et de l'amplificateur-détecteur de la force électromotrice du thermocouple. Le chauffage et la mesure de température sont faits alternativement grâce aux arrêts de courant de chauffage entre deux impulsions. Le signal amplifié du thermocouple est comparé à un signal de référence représentant la température à atteindre. Lorsque ces deux signaux sont introduits dans le comparateur de niveaux et que la température de consigne est atteinte, ce dernier commande un interrupteur électronique qui coupe le train d'impulsions de chauffage. La diminution de température qui en résulte produit une diminution de la force électromotrice du thermocouple et le comparateur rétablit le train des impulsions de chauffage.

En général, afin de détecter facilement la force électromotrice du thermocouple qui, suivant la nature des métaux et du sens de raccordement, est positive ou négative par rapport à la masse du détecteur, les impulsions de chauffage seront de polarité inverse par rapport à cette même masse. Si les impulsions de courant de chauffage sont alternativement positives et négatives, il suffira de synchroniser le fonctionnement du détecteur avec les arrêts de courant de chauffage et de l'inhiber pendant le passage de ce courant de chauffage.

Pour expliquer le fonctionnement de la boucle de régulation, un schéma annexé de principe est donné à titre exemplatif et non limitatif. Il est facile de développer
d'autres circuits électroniques constituant une boucle
de régulation commandant un transistor ou un triac en
guise d'interrupteur pour autant que des interruptions
de courant de chauffage soient produites et que l'on détecte la force électromotrice du thermocouple que constitue la résistance, pendant les intervalles.

Par le fait que les mesures de température sont effectuées pendant les passages au potentiel zéro des phases
des réseaux de distribution d'électricité, cette méthode
permet la mesure de température sous signaux parasites produits par les utilisateurs du réseau.
Dans le système de chauffage par induction, une jonction
thermocouple peut être introduite dans la bobine d'induction avec le matériau à chauffer. La synchronisation du
détecteur amplificateur avec de brèves interruptions du
générateur permet la mesure de la température de la
jonction thermocouple; cette température étant fonction
de l'énergie induite par les impulsions de chauffage, il
est possible de contrôler la température du matériau par
analogie.

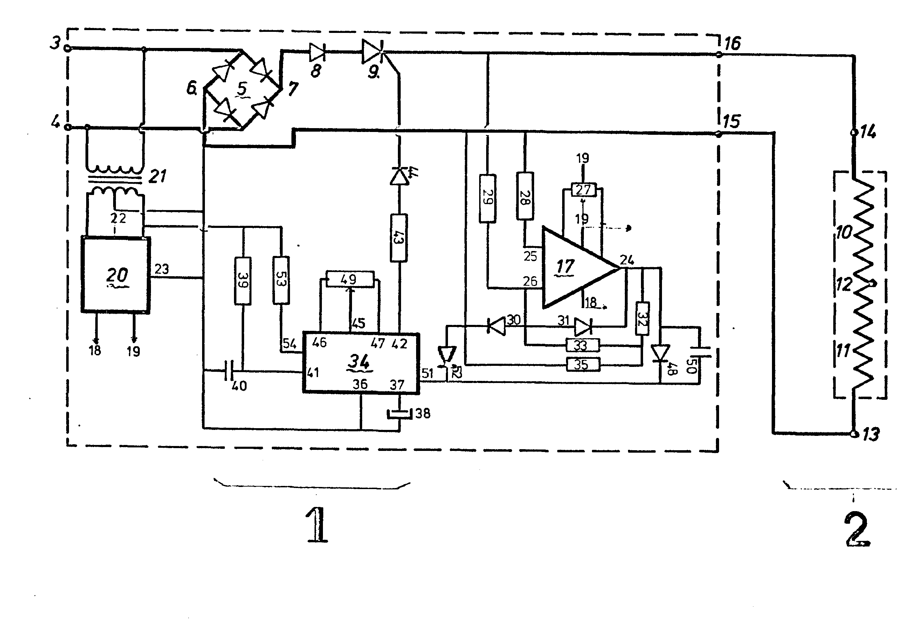

Dans la figure du dessin, on a représenré un régulateur 1 et une résistance chauffante 2 reliés entre-eux
au moyen de deux conducteurs 13-15 et 14-16.
Le fonctionnement de l'ensemble est expliqué ci-après.

La résistance chauffante 2 est constituée de deux métaux
10 et 11 raccordés respectivement entre les bornes 14 et
13 par une extrémité et soudés ensemble au point 12 qui
constitue une jonction thermocouple car les métaux utilisés
sont ceux utilisés couramment pour réaliser des thermocouples, tels que
Fer-Constantan, Nickel-Nickel-Chrome, etc...
Dans l'exemple donné, on a utilisé entre-autre, des fils
de fer (+) pour la partie 11 et de constantan (-) pour la
partie 10. Ces fils, isolés à l'amiante, ont été soudés
ensemble pour constituer la jonction 12. Les deux
extrémités 14 et 13 de la résistance ainsi constituées
sont raccordées à deux fils de cuivre 14-16 et 13-15
allant au régulateur 1. Ces connexions 13 et 14 sont
fixées sur un support céramique afin de les maintenir
à la même température et annuler ainsi les couples
électriques dont elles sont le siège.

Dans le régulateur 1 il faut distinguer le circuit générateur d'impulsions de chauffage et le circuit électronique
détectant la température due au thermocouple 12 et commandant l'interrupteur de courant de chauffage.

Dans l'exemple donné à la figure unique, les impulsions
de courant de chauffage sont obtenues en appliquant entre
les bornes 3 et 4, une différence de potentiel alternative
qui, après redressement dans le pont de diodes 5, délivre des impulsions entre les points 6 et 7.
La polarité de ces impulsions définie par rapport au point
6 est positive en 7. Ce point 6 servira de référence pour
définir la polarité des différents potentiels dans la suite des
ex-plications; ce point 6 est au potentiel appelé niveau
zéro des impulsions de courant de chauffage.
Ayant appliqué entre les bornes 3 et 4 une tension alternative sinusoïdale à 50HZ, les impulsions obtenues entre 6 et
7 sont des demi-alternances dont le potentiel varie de zéro
à une valeur maximale positive. Les niveaux zéro des impulsions sont séparés par un très court intervalle de temps à cause de la tension de seuil des diodes du pont redresseur 5. On sait qu'il faut un certain potentiel entre l'anode et la cathode d'une diode avant qu'elle ne laisse passer du courant et pendant l'établissement de ce potentiel entre les bornes 3 et 4, il n'y a pas de variation de potentiel entre les bornes 6 et 7 du pont redresseur 5. Les augmentations de potentiel entre les points 6 et 7 devront dépasser le seuil de la diode 8 avant que l'on applique une tension positive par rapport au point 6 sur l'anode du thyristor 9. En supposant que ce thyristor reçoive une impulsion de commande sur la gâchette, il faudra que le potentiel positif appliqué sur son anode augmente jusqu'à la tension anode-cathode nécessaire à l'allumage. On voit donc que le point 16 alimentant la résistance 2 ne recevra de potentiel positif par rapport au point 6 qu'après le temps nécessaire à l'augmentation de potentiel entre les points 3 et 4, suffisant pour dépasser les seuils diodes et la tension anode-cathode minimale du thyristor 9. Ce potentiel positif au point 16 disparaîtra dès que la tension entre les points 3 et 4 sera retombée à une valeur inférieure à cette somme de seuils d'iodes et de tension anode-cathode du thyristor. On comprend que les intervalles de temps sont fonction de la vitesse de croissance du potentiel appliqué entre les points 3 et 4, mais les circuits électroniques actuels permettent de détecter des phénomènes très rapides et on a le temps suffisant pour mesurer la différence de potentiel due au thermocouple 12 et subsistant aux bornes 14 et 13 de la résistance de chauffage 2.

La fonction de la diode 8 est de permettre l'alimentation de plusieurs circuits de chauffage, résistance 2 et thyristor 9, à partir d'un seul pont redresseur 5 sans avoir d'interférences. Chaque circuit étant connecté entre les points 6 et 7 et ayant sa propre diode de séparation 8.

En résumé, on applique donc entre les points 14 et 13, extrémités de la résistance chauffante 2, des impulsions positives dont les niveaux zéro sont séparés par un court intervalle de temps.

Pendant la durée des impulsions de courant de chauffage, il s'établit un courant dans la résistance 2, et partant un échauffement des métaux 10 et 11.

La jonction 12 chauffe également et devient le siège d'une force électromotrice due au couple des métaux 10 et 11. Lorsque le courant cesse à la fin de l'impulsion , et comme le choix des métaux dans l'exemple est tel que le 10 soit du constantan (-) et le 11 du fer (+), la force électromotrice du thermocouple 12 est négative au point 14 par rapport au point 13, relié au point 6 du pont redresseur 5 par l'intermédiaire de la borne 15. On a donc, pendant la durée des impulsions de chauffage, une tension positive de 220 volts au point 16 et pendant les intervalles séparant les impulsions, un potentiel négatif à ce même point 16. Ce potentiel négatif est de très faible amplitude et est de l'ordre de 40 à 50 microvolts par degré celcius, suivant la nature des métaux 10 et 11. Il ne dépend pas des dimensions physiques de l'élément chauffant 2 ni de sa résistance chimique. Il faut donc détecter et amplifier ces faibles potentiels négatifs en négligeant les potentiels élevés des impulsions de chauffage.

L'amplificateur différentiel µA741, 17, sert de détecteur et d'amplificateur de la force électromotrice due au thermocouple. Le fonctionnement en est très simple.

- 7 -

Tout d'abord, il est alimenté en + et - 15 volts respectivement à ses bornes 18 et 19. Ces tensions continues stabilisées sont fournies par une petite alimentation 20 raccordée au transformateur abaisseur 21, alimenté à son primaire, aux bornes 3 et 4, et dont le secondaire fournissant deux fois 20 volts à son point milieu 22 connecté au point 6 du pont redresseur à diodes 5. Ce transporteur peut servir pour plusieurs régulateurs de même que l'alimentation 20 dont le point 23, commun aux deux tensions 18 et 19 + et - 15 volts, est lui-même raccordé au point milieu 22 du transporteur 21.

L'équilibrage de l'amplificateur différentiel 17, annulant tout signal de sortie au point 24 en l'absence de signaux d'entrée à ses bornes 25 et 26, est effectué par le potentiomètre 27 dont le curseur est alimenté par le - 15 volt 19 de l'alimentation 20.

L'entrée non inverseuse 25 de l'amplificateur 17 est raccordée par l'intermédiaire d'une résistance 28 au point 6 du pont de diode 5, niveau zéro des impulsions de courant de chauffage. L'entrée 26, inverseuse, est raccordée au point 16 via une résistance 29. Ce point 16 est le siège des potentiels positifs de chauffage et négatifs dus au thermocouple.

Pour des signaux positifs ou négatifs appliqués à l'entrée inverseuse 26, le gain de l'amplificateur 17 est différent. Pour des signaux positifs, une diode 30 en limite l'amplitude à quelques dixièmes de volt en les dérivant au niveau zéro 6 et une forte contre-réaction entre la sortie 24 et l'entrée 26, due à la diode 31, empêche le circuit 17 de les amplifier.

Pour les potentiels négatifs, les résistances 29, 32, 33 et 35 règlent la contre réaction afin d'obtenir un gain important. Dans le cas de l'exemple, le gain a été limité à 500 en prenant : R33 égale à 100 fois R29 et R32 égale à 4 fois R35.

Les signaux de sortie obtenus en 24 seront donc négatifs pour des signaux d'entrée positifs en 26 et des signaux de sortie positifs seront obtenus en 24 pour des potentiels négatifs appliqués sur cette même entrée 26. Les gains étant différents, on aura des signaux de sortie en 24 de très faible amplitude négative et de très grande amplitude positive.

Par exemple, si la jontion 12 est à 300° celsius, la force électromotrice négative appliquée à l'entrée 26 est de 0,01655 volt, qui après amplification par un facteur de 500 produisant à la sortie 24 de l'amplificateur 17 une tension positive de 0,01655 x 500 = 8,275 volts, alors que les quelques dixièmes de volt positifs appliqués à l'entrée 26 pendant les impulsions de chauffage ne donnent que quelques dixièmes de volt négatifs à la sortie 24 de l'amplificateur 17.

Le thyristor 9 servant d'interrupteur, il faut le commander au moyen de circuits fournissant des impulsions à sa gâchette lors des passages à zéro des impulsions de chauffage et il faut également asservir cette commande à la température désirée à la résistance. Il faut donc comparer la force électromotrice amplifiée du thermocouple à une tension de référence et ne déclencher les impulsions de commande du thyristor qu'après la fin des impulsions de chauffage si la température n'est pas atteinte. Si celle-ci est telle que désirée, il faut interrompre les impulsions de commande du thyristor. Un circuit intégré 34 existant
sur le marché du matériel électronique remplit ces
fonctions et pour l'exemple donné à la figure unique, on
a utilisé un circuit TDA 1023. Le circuit intégré du
même genre TDA 1024 convient également très bien pour
la réalisation de ces fonctions.

Le TDA 1023 doit être alimenté 54, ce qui est effectué
à travers une résistance 53 raccordée à un des enroulements
secondaires du transformateur 21 et la tension continue
obtenue entre ses bornes 36 et 37 par ses circuits internes est filtrée par le condensateur 38.

Le point 36, masse du circuit 34 est raccordé au point 6
du point de diode 5. Ce circuit 34 doit détecter les passages à zéro du potentiel alternatif appliqué entre les
bornes 3 et 4. Le signal de ces passages lui est fourni par le
--- secondaire du transformateur 21 à travers la résistance 39. On remarque la présence d'air condensateur
40 entre la borne 41 du circuit 34 et la borne 36 de ce
même circuit. Ce condensateur 38 est nécessaire afin de
retarder légèrement l'arrêt du courant fourni au circuit
34 via la résistance 39 car le circuit de synchronisation
interne déclenche l'impulsion de commande du thyristor 9
juste au milieu de l'espace de temps séparant deux impulsions de chauffage. Pour dégager cet espace, il suffit
de maintenir le courant fourni au point 41 pendant un très
court instant après le passage à zéro du potentiel alternatif appliqué aux bornes 3 et 4. C'est ce que fait ce
condensateur 40 en se déchargeant entre les bornes 36 et
41 du circuit 34.

Par cet artifice, on obtient donc des impulsions de commande retardées pour la gâchette du thyristor 9 au point 42 et on les applique à cette gâchette via la résistance 43 et la diode 44. La résistance 43 est adaptée en fonction de la valeur ohmique de la résistance 2 afin d'adapter le courant gâchette-cathode dans le thyristor 9 capable de produire l'allumage. Après allumage, la gâchette du thyristor suivant les potentiels des impulsions de chauffage, la diode 44 empêche le point 42 du circuit 34 d'être soumis à des potentiels élevés. Pour que l'on puisse interrompre les impulsions de commande de gâchette, le circuit 34 comporte également un comparateur interne.

Ce comparateur va servir à détecter l'amplitude des impulsions résultant de l'échauffement de la jonction thermocouple 12 et présentes à la sortie 24 de l'amplificateur 17.

Sur une des entrées 45 du comparateur, on applique une tension de référence choisie par le curseur du potentiomètre 49 alimenté entre les bornes de sortie 47 et 46 du stabilisateur de tension interne du circuit 34. L'autre entrée 51 du comparateur interne reçoit les signaux positifs passant à travers la diode 48 et dont l'amplitude est proportionnelle à la température de la jonction 12. Le condensateur 50 et la diode 52 servent à la mise en forme de ces signaux qui, provenant de la sortie 24 de l'amplificateur 17, sont des formes d'impulsions de durée égale aux interruptions de courant entre deux impulsions de chauffage. Donc, à la fin de chaque impulsion de courant de chauffage, le comparateur interne du circuit 34 reçoit, sur une entrée, un signal proportionnel à la température de la jonction 12 et sur l'autre, un potentiel de référence choisi par le curseur du potentiomètre 49. C'est à cet instant que la commande du thyristor doit être réalisée ou non suivant que l'amplitude des impulsions appliquées
sur l'entrée 51 du circuit 34 est inférieure ou dépasse
le potentiel de référence appliqué à l'entrée 45 du
circuit 34.

Une différence de 0,02 volt entre ces deux signaux provoque la présence ou l'absence de signaux de commande
pour la gâchette du thyristor au point 42 du circuit 34.
Cet hystérèse détermine la sensibilité du système régulateur
car, pour obtenir une variation de 0,02 volt au point
51, il faut une variation de 0,02 : 500 = 0,00004 volt soit
40 microvolt à l'entrée 26 de l'amplificateur 17. Une
variation de cette valeur est équivalente à moins d'un
degré celsius de variation de température de la jonction
12; pour le thermocouple Fer-Constantan, une variation
de 1°celsius produit une variation de force électromotrice de 56 microvolt. Si la résistance était constituée
au moyen de nickel et de nickel-chrome, une variation
de température de 1°celsius donnerait 40 microvolt de
variation de force électromotrice. On peut donc affirmer
que la boucle de régulation répond à des variations d'un
degré celsius.
Un gain très élevé de l'amplificateur 17 augmenterait
cette sensibilité mais il ne s'est pas avéré nécessaire
de le réaliser pour l'exemple décrit.

De manière non limitative, la présente invention ouvre la
voie aux applications suivantes :
elle est utilisable dans une grande quantité de systèmes
à températures régulées, tels que les fours tant industriels
que domestiques, appareils pour griller les matières,
bains de liquides ou soudure, chaudières électriques, moules

pour matières plastiques ou métaux légers, nez d'injection ou filières d'extrusion et tout endroit où l'exéguité du volume disponible exclu l'emploi d'un élément chauffant et d'une sonde séparés. Les applications dans les atmosphères explosives permettent de limiter les dangers dus à la surchauffe des éléments chauffants. Dans certains processus, la précision de régulation de l'élément chauffant permet d'éviter des dangers ou des erreurs de fonctionnement ou de réaction.

Les métaux des thermocouples résistant à des températures très élevées, elle permet de contrôler de façon ininterrompue et linéaire, au moyen d'appareils simples, des températures situées dans la gamme de -70° celsius à + 1000° celsius.

Elle permet de réaliser des systèmes de régulation-mesure multiplexés grâce au temps très court nécessaire à la mesure de température.

Elle est applicable à une large variété d'outils tels que fils à découper les matières plastiques, les chalumeaux à air chaud, les ventilateurs à air chauffé et surtout les fers à souder où l'élément chauffant est très petit. Dans ce dernier cas, la différence de coût entre une résistance normale et une résistance thermocouple étant très faible, on peut normaliser les fers à souder pour les rendre utilisables au moyen d'une source non stabilisée ou d'une source régulée. Le régulateur s'adaptera automatiquement à la puissance du fer à souder et permettra une régulation très précise et continue.

- 13 -

Dans le domaine médical, vu le faible volume dans lequel l'élément chauffant régulé peut être logé, des cautériseurs régulés peuvent être réalisés.

Dans le domaine optique, une régulation de température des lentilles peut être réalisée aisément en vue du maintien des dimensions d'origine dans des environnements à très basse température, tels que la haute altitude. Dans ces mêmes environnements, la protection contre le givrage de certaines sondes peut être réalisée facilement.

Des anémomètres et débitmètres très sensibles à des faibles déplacements des gaz ou des fluides peuvent être réalisés car les pertes thermiques sont une fonction du déplacement de l'élément chauffant et la fréquence d'impulsions de chauffage est fonction des pertes thermiques.

Dans tous les cas où l'élément chauffant doit être contrôlé de façon précise, cette invention est applicable tant pour protéger que pour réguler et il est impossible de prévoir tous les cas d'utilisation. L'avantage incontestable de la réduction à deux conducteurs de raccordement et de la combinaison de l'élément chauffant et du thermocouple donnant une information linéaire de la température indépendante des dimensions physiques des éléments ouvre une nouvelle voie dans la technique de régulation de température par la méthode de chauffage et mesure alternés.

0001542

- 1 -

Revendications de brevet

1. Procédé de régulation de la température d'une résistance de chauffage caractérisé en ce que l'on utilise l'élément chauffant lui-même comme sonde de température de sorte à ne devoir prévoir que deux fils à l'appareillage de régulation de chauffage.

2. Procédé de régulation selon la revendication 1 caractérisé en ce que l'on utilise, pour réaliser l'élément chauffant et la sonde de température, deux métaux formant ensemble thermocouple que l'on relie par deux fils à une boucle de régulation et une source d'énergie chauffante régulée.

3. Procédé de régulation selon l'une quelconque des revendications 1 et 2 caractérisé en ce qu'alternativement l'on chauffe et mesure la température au moyen du chauffage par impulsion du courant électrique.

4. Procédé de régulation selon la revendication 3 caractérisé en ce que l'on mesure la température en milieux parasités en détectant la force électromotrice due au thermocouple lors du passage à zéro de la tension d'alimentation.

5. Dispositif électrique pour la régulation de la température d'une résistance pour la mise en oeuvre du procédé selon l'une quelconque des revendications 1 à 4, caractérisé en ce que la résistance chauffante (2) constituée par deux métaux (10 et 11) formant en un point (12) thermocouple, ces métaux étant relié chacun par un seul fil (14, 16) et (13, 15) à un régulateur (1) relié aux bornes (3 et 4).

6. Dispositif électrique selon la revendication 5, caractérisé en ce que le régulateur (1) comporte un circuit générateur d'impulsions (5, 6, 7) de chauffage et un circuit électronique (17, 34) détectant la température du thermocouple (12) et commandant l'interrupteur de chauffage (9).

7. Dispositif électrique selon la revendication 6, caractérisé en ce que le régulateur (1) comporte un amplificateur différentiel (17) servant à détecter et amplifier la force électromotrice due au thermocouple (12).

8. Dispositif électrique selon la revendication 7, caractérisé en ce que le régulateur (1) comporte un circuit (34) détectant le passage à zéro du potentiel alternatif appliqué entre les bornes (3 et 4) et commandant l'interrupteur de chauffage (9) après la détection et la mesure de la force électromotrice due au thermocouple (12).

EECKHOUT Jules et Georges    Bruxelles le        1978

0001542

| Catégorie | Citation du document avec indication, en cas de besoin, des parties pertinentes | Revendication concernée |
|---|---|---|
| - | DE - B - 2 040 523 (DANFOSS)<br>* revendication 1; colonne 1 *<br>&  FR - A - 2 104 247<br><br>-- | 1 |
| - | DE - A - 2 255 736 (SIEMENS)<br>* revendications 1, 2 *<br><br>-- | 1,2 |
| - | DE - B - 1 295 111 (BAYER)<br>* revendications *<br><br>-- | 1,3 |
| - | DE - A - 2 322 191 (F.A.R.O.)<br>* revendications *<br><br>-- | 1,3,6<br>7 |
| - | FR - A - 1 495 221 (M.G. PISCHA)<br>* résumé *<br><br>---- | 2,5 |

## DOCUMENTS CONSIDERES COMME PERTINENTS

**CLASSEMENT DE LA DEMANDE (Int. Cl.²)**

G 05 D  23/01
H 05 B   3/00

**DOMAINES TECHNIQUES RECHERCHES (Int. Cl.²)**

G 05 D   23/01
H 05 B   1/02
H 05 B   3/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X  Le présent rapport de recherche a été établi pour toutes les revendications

| Lieu de la recherche | Date d'achèvement de la recherche | Examinateur |
|---|---|---|
| Berlin | 23-01-1979 | BEYER |

OEB Form 1503.1  06.78